# EUROPEAN PATENT APPLICATION

(11) **EP 4 657 675 A1**
(43) Date of publication of application: **03.12.2025**
(21) Application number: 24769954.9
(22) Date of filing: 13.03.2024
(51) Int. Cl.: H01R 13/52

(54) **SAFETY SOCKET**

(30) Priority: 16.03.2023 CN 202310303561
(71) Applicant: Shenzhen Zhongkediangong New Energy Tech Co., Ltd., Shenzhen, Guangdong 518000 (CN)
(72) Inventor: XU, Chenglie, Shenzhen, Guangdong 518000 (CN)
(74) Representative: Herrero & Asociados, S.L.
(86) International application number: PCT/CN2024/081376
(87) International publication number: WO 2024/188263

(57) **Abstract**

A safety socket comprises a faceplate unit, which comprises a first housing, and the first housing is provided with insertion holes, which are configured for the insertion of plug pins; a bottom housing, which is arranged below the first housing; a protective door, which is arranged between the first housing and the bottom housing; when the plug pins are not inserted into the socket, the protective door abuts against the inner surface of the first housing and blocks the insertion holes; a driving and guiding structure, which includes a driving member and a guiding portion, the driving member is arranged on the protective door and/or the first housing, and the driving member is configured to drive the protective door to attach to the first housing; the guiding portion is arranged on the faceplate unit and is configured to guide the moving direction of the protective door when the plug pins are inserted into or pulled out from the insertion holes. In this way, the problem of water entering the insertion holes when the socket is not in use is solved.

## Description

### TECHNICAL FIELD

The present disclosure relates to the technical field of electrical connectors, and particularly relates to a safety socket.

### BACKGROUND

During daily electricity use, electric shock injuries, especially those caused by water entering sockets, occur from time to time. Sockets are distributed in every corner of work and living spaces. If water is accidentally spilled onto a socket, it may cause the live parts of the socket to become immersed, thereby increasing the likelihood of electric shock accidents during use. According to current safety standards, the live parts of compliant sockets are concealed inside the socket housing when the plug is not inserted, and cannot be directly contacted from outside. However, under current safety standards, when water is spilled onto the insertion holes or the socket is accidentally immersed in water, water can enter the interior of the socket through the insertion holes. If a plug is inserted into a socket containing internal water accumulation, it may result in an electric shock accident. Although using a socket with internal water accumulation does not necessarily cause electric shock, it is undeniable that compared to a socket with a dry interior, the risk of electric shock is much greater when the socket contains internal water accumulation. Therefore, improvements are still needed in the prior art.

### SUMMARY

The main purpose of the present disclosure is to provide a safety socket, aiming to solve the problem that water can enter the insertion holes when the socket is not in use.

To achieve the above purpose, the safety socket proposed by the present disclosure includes a faceplate unit. The faceplate unit comprises a first housing, and the first housing is provided with insertion holes; the insertion holes are configured for the insertion of plug pins; The safety socket includes a bottom housing, the bottom housing is arranged below the first housing; The safety socket includes a protective door, the protective door is arranged between the first housing and the bottom housing; when the plug pins are not inserted into the socket, the protective door abuts against the inner surface of the first housing and blocks the insertion holes; The safety socket includes a driving and guiding structure, the driving and guiding structure includes a driving member and a guiding portion, the driving member is arranged on the protective door and/or the first housing, and the driving member is configured to drive the protective door to attach to the first housing; the guiding portion is arranged on the faceplate unit and is configured to guide the moving direction of the protective door when the plug pins are inserted into or pulled out from the insertion holes.

Preferably, the protective door is provided with through holes for the plug pins to pass through; when the plug pins are not inserted into the socket, the through holes are misaligned with the insertion holes, so that the protective door blocks the insertion holes.

Preferably, the driving member includes a first magnet arranged on the protective door and a second magnet arranged on the faceplate unit; the first magnet and the second magnet attract or repel each other, so that the protective door is attached to the first housing.

Preferably, the faceplate unit further includes a second housing, the protective door is arranged between the first housing and the second housing; the second magnet is arranged on the second housing and repels the first magnet; the first magnet is located between the second magnet and the insertion holes in the horizontal direction.

Preferably, the second magnet is arranged on the first housing and is attracted by the first magnet.

Preferably, the protective door is provided with a first accommodating recess for fixing the first magnet; the faceplate unit is provided with a second accommodating recess for fixing the second magnet.

Preferably, a thickness of groove bottom of the first accommodating recess is between 0.03 mm and 2 mm.

Preferably, the protective door is provided with a first magnet recess, the first magnet is arranged in the first magnet recess; the first housing is provided with a second magnet recess, the second magnet is arranged in the second magnet recess; when the protective door blocks the insertion holes, the first magnet recess and the second magnet recess are aligned with each other; the first magnet and the second magnet attract each other.

Preferably, the protective door is provided with a first magnet recess, the first magnet is arranged in the first magnet recess; the faceplate unit includes a second housing, and the first housing is arranged above the second housing; the second housing is provided with a third magnet recess, and the second magnet is arranged in the third magnet recess; when the plug pins are inserted into the socket, the first magnet recess is located between the third magnet recess and the insertion holes; the first magnet and the second magnet repel each other.

Preferably, the first magnet recess is arranged at both ends of the protective door.

Preferably, the protective door is provided with a first magnet recess, the first magnet is arranged in the first magnet recess; the first magnet recess is arranged at one end of the protective door; the first housing is provided with a magnet mounting protrusion, the second magnet is mounted on the magnet mounting protrusion, and the magnet mounting protrusion is close to the first magnet recess.

Preferably, the driving member is a spring, the spring has a first spring end and a second spring end that are opposite to each other; the first spring end is arranged on the protective door, and the spring is configured to elastically tension or press the protective door so that the protective door is attached to the first housing.

Preferably, the second spring end is arranged on the first housing, and the spring tensions the protective door so that the protective door is attached to the first housing.

Preferably, the faceplate unit includes a third housing, and the first housing is arranged above the third housing; the second spring end is arranged on the third housing, and the spring elastically presses the protective door so that the protective door is attached to the first housing.

Preferably, a plurality of the springs is provided, and the springs are arranged at both ends of the protective door.

Preferably, the protective door has a first protective door end and a second protective door end that are opposite to each other, and the first spring end is arranged at the first protective door end; the first housing is provided with a spring mounting protrusion, the second spring end is mounted on the spring mounting protrusion, and the spring mounting protrusion is close to the first protective door end.

Preferably, the upper surface of the protective door is provided with a blocking protrusion, and the blocking protrusion is configured to block the insertion holes.

Preferably, the first housing is provided with a limiting protrusion, and the limiting protrusion is arranged at both ends of the protective door.

Preferably, the guiding portion is provided with a guiding slot, the protective door is provided with a guiding protrusion adapted to the guiding slot, and the guiding protrusion is embedded into the guiding slot; the guiding slot and the guiding protrusion are configured such that, when the protective door moves, the protective door moves in the direction in which the insertion hole and the through hole are aligned or misaligned.

Preferably, the guiding protrusion is located in the middle of both sides of the protective door, so that when a single plug pin is inserted into the insertion hole, the protective door swings.

Preferably, the guiding slot includes a transverse slot and a sinking slot; the sinking slot has a first sinking slot end and a second sinking slot end that are opposite to each other; the first sinking slot end is close to the first housing, and the second sinking slot end extends away from the first housing; the second sinking slot end is connected with the transverse slot.

Preferably, the sinking slot and the transverse slot are formed as straight slots, and the angle between the direction in which the pin is inserted into the insertion hole and the sinking slot is smaller than the angle between the direction in which the pin is inserted into the insertion hole and the transverse slot.

Preferably, the guiding slot further includes an arc-shaped slot, and the arc-shaped slot is arranged at connecting area between the second sinking slot end and the transverse slot.

Preferably, the safety socket is provided with a stop structure, and the stop structure includes a first stop portion and a second stop portion; the protective door has a first protective door end, the first stop portion is arranged at the first protective door end, and the second stop portion is arranged on the first housing; the first stop portion and the second stop portion are configured such that, when a single plug pin is inserted into the insertion hole away from the first protective door end, the first stop portion abuts against the second stop portion, restricting the movement of the protective door and blocking the single plug pin from electrically connecting with the safety socket.

Preferably, the faceplate unit includes a second housing, the first housing is arranged above the second housing, and the stop structure includes a third stop portion; the third stop portion is arranged on the second housing; the first stop portion and the third stop portion are configured such that when a single plug pin is inserted into the insertion hole close to the first protective door end, the first stop portion abuts against the third stop portion, thereby restricting the movement of the protective door and blocking the single plug pin from electrically connecting with the safety socket.

Preferably, the first stop portion is provided with an avoidance recess, the second housing is provided with a protective door sinking slot, and the third stop portion is arranged in the protective door sinking slot; the avoidance recess is configured such that, when the plug pin is inserted into the insertion hole, the protective door bypasses the third stop portion via the avoidance recess; the protective door sinking slot is configured such that, when the plug pin is inserted into the insertion hole, the protective door is embedded into the protective door sinking slot.

The safety socket provided by the embodiment of this application includes a faceplate unit. The faceplate unit comprises a first housing, and the first housing is provided with insertion holes; the insertion holes are configured for the insertion of plug pins; The safety socket includes a bottom housing, the bottom housing is arranged below the first housing; The safety socket includes a protective door, the protective door is arranged between the first housing and the bottom housing; when the plug pins are not inserted into the socket, the protective door abuts against the inner surface of the first housing and blocks the insertion holes; The safety socket includes a driving and guiding structure, the driving and guiding structure includes a driving member and a guiding portion, the driving member is arranged on the protective door and/or the first housing, and the driving member is configured to drive the protective door to attach to the first housing; the guiding portion is arranged on the faceplate unit and is configured to guide the moving direction of the protective door when the plug pins are inserted into or pulled out from the insertion holes. In this way, the problem of water entering the insertion holes when the socket is not in use is solved.

### BRIEF DESCRIPTION OF THE DRAWINGS

In order to more clearly illustrate the technical solutions in the embodiments of the present disclosure or the prior art, the drawings required in the description of the embodiments or the prior art will be briefly introduced below. It is evident that the drawings described below are only some embodiments of the present disclosure. For those skilled in the art, other drawings may also be obtained based on the structures shown in these drawings without creative efforts.
Fig. 1 is an exploded view of a safety socket provided in one embodiment of the present disclosure;
Fig. 2 is a schematic view of the first housing of the safety socket provided in one embodiment of the present disclosure;
Fig. 3 is another schematic view of the first housing of the safety socket provided in one embodiment of the present disclosure;
Fig. 4 is a sectional view of the first housing of the safety socket provided in one embodiment of the present disclosure;
Fig. 5 is another sectional view of the first housing of the safety socket provided in one embodiment of the present disclosure;
Fig. 6 is a schematic view of the protective door of the safety socket provided in one embodiment of the present disclosure;
Fig. 7 is another schematic view of the protective door of the safety socket provided in one embodiment of the present disclosure;
Fig. 8 is a schematic view of the stop structure of the protective door of the safety socket provided in one embodiment of the present disclosure;
Fig. 9 is an exploded view of a safety socket provided in another embodiment of the present disclosure;
Fig. 10 is an exploded view of a safety socket provided in another embodiment of the present disclosure.

Reference numerals in the drawings:

| Reference numeral | Component name | Reference numeral | Component name |
|---|---|---|---|
| 100 | faceplate unit | 410 | driving member |
| 110 | first housing | 411 | first magnet |
| 111 | insertion hole | 412 | second magnet |
| 112 | limiting protrusion | 413 | spring |
| 120 | second housing | 420 | guiding portion |
| 121 | protective door sinking slot | 421 | guiding slot |
| 130 | third housing | 421a | transverse slot |
| 200 | base housing | 421b | sinking slot |
| 300 | protective door | 421b-1 | first sinking slot end |
| 310 | through hole | 421b-2 | second sinking slot end |
| 320 | first magnet recess | 421c | arc-shaped slot |
| 330 | Second magnet recess | 430 | guiding protrusion |
| 340 | blocking protrusion | 500 | stop structure |
| 350 | third magnet recess | 510 | first stop portion |
| 400 | driving and guiding structure | 511 | avoidance recess |
| | | 520 | second stop portion |
| | | 530 | third stop portion |

The realization of the objectives, functional features, and advantages of the present disclosure will be further described in conjunction with the embodiments and with reference to the accompanying drawings.

### EMBODIMENTS OF THE INVENTION

The technical solutions in the embodiments of the present disclosure will be clearly and completely described below in conjunction with the accompanying drawings in the embodiments of the present disclosure. Obviously, the described embodiments are only a part of the embodiments of the present disclosure, and not all of the embodiments. Based on the embodiments of the present disclosure, all other embodiments obtained by those of ordinary skill in the art without creative efforts shall fall within the scope of protection of the present disclosure.

It should be noted that if there are directional indications (such as up, down, left, right, front, back, etc.) involved in the embodiments of the present disclosure, such directional indications are only used to explain the relative positional relationship and movement status among the components under a particular posture (as shown in the drawings). If the particular posture is changed, the directional indications shall also be changed accordingly.

In addition, if there are descriptions involving "first", "second", etc. in the embodiments of the present disclosure, such descriptions are merely for illustrative purposes and should not be construed as indicating or implying their relative importance or implicitly indicating the number of technical features referred to. Therefore, features defined with "first" or "second" may expressly or implicitly include at least one such feature. Furthermore, the technical solutions among various embodiments can be combined with each other, but only on the basis that those of ordinary skill in the art can realize such combinations. When the combination of technical solutions results in contradictions or cannot be realized, it should be understood that such combinations do not exist and are not within the scope of protection required by the present disclosure.

During daily electrical use, electric shocks, especially those caused by water entering the socket, occur from time to time. Sockets are distributed in every corner of work and living spaces. If water is accidentally spilled onto the socket, the live parts of the socket may become wet, which can easily cause electric shock accidents during use. In sockets that comply with current safety regulations, the live parts are hidden inside the socket housing when the plug is not inserted and cannot be directly touched from the outside. However, in sockets under current safety standards, when water is spilled into the insertion holes or the socket is accidentally immersed, water can enter the interior of the socket through the insertion holes. If a plug is inserted when water has accumulated inside the socket, it may result in an electric shock accident. Although using a socket with internal water accumulation does not necessarily lead to electric shock, it is undeniable that compared to a dry socket, a socket with internal water accumulation has a higher risk of electric shock. Therefore, further improvement is needed in the prior art.

To solve the above problem, the present patent provides a safety socket, aiming to solve the problem that water can enter the insertion holes when the socket is not in use.

For ease of understanding, the following will describe in detail the specific embodiments of the present application in conjunction with the accompanying drawings.

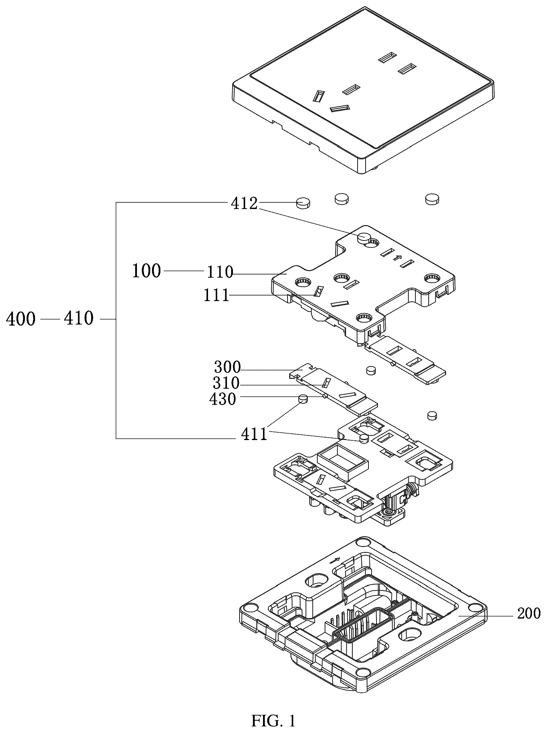

Please refer to Fig. 1, a safety socket comprises a faceplate unit 100, the faceplate unit 100 includes a first housing 110, the first housing 110 is provided with a insertion hole 111; the insertion hole 111 is configured for insertion of the plug pins; a bottom housing 200, the bottom housing 200 is disposed below the first housing 110; a protective door 300, the protective door 300 is disposed between the first housing 110 and the bottom housing 200; when the plug pins are not inserted into the socket, the protective door 300 abuts against the inner surface of the first housing 110 and blocks the insertion hole 111; a driving and guiding structure 400, the driving and guiding structure 400 includes a driving member 410 and a guiding portion 420, the driving member 410 is disposed on the protective door 300 and/or the first housing 110, and the driving member 410 is configured for driving the protective door 300 to attach to the first housing 110; the guiding portion 420 is disposed on the faceplate unit 100 and is configured for guiding the movement direction of the protective door 300 when the plug pin is inserted into or pulled out of the insertion hole 111.

In this embodiment, the first housing 110 of the faceplate unit 100 can block most of the water outside the first housing 110. The protective door 300 is disposed between the first housing 110 and the bottom housing 200, so that the protective door 300 can prevent water from entering the insertion hole 111. When the plug pins are not inserted into the socket, the protective door 300 abuts against the inner surface of the first housing 110 and blocks the insertion hole 111, enabling the protective door 300 to effectively prevent water from entering the insertion hole 111. The way in which the protective door 300 abuts against the inner surface of the first housing 110 can be various. For example, the protective door 300 may be in full contact or in partial contact with the inner surface. Regardless of whether the protective door 300 is in full or partial contact, it is only required that the insertion hole 111 is adequately blocked.

The driving member 410 of the driving and guiding structure 400 drives the protective door 300 to attach to the first housing 110, so that when the plug pins are not inserted, the protective door 300 can be attached to the first housing 110 to block the insertion hole 111, or when the plug pins are pulled out, the protective door 300 is able to return to the position where it blocks the insertion hole 111 as it did before the plug pins were inserted.

The guiding portion 420 of the driving and guiding structure 400 can guide the movement direction of the protective door 300 when the plug pins are inserted into or pulled out of the insertion hole 111, so that when the plug pins are inserted into the insertion hole 111, the protective door 300 is guided to move in the direction that allows the insertion of the plug pins, or when the plug pins are pulled out, the protective door 300 is guided to move in the direction that blocks the insertion hole 111.

As a result, the problem that water may enter the insertion hole 111 when the socket is not in use is solved.

It should be noted that the plug pins are inserted into the socket through the insertion holes 111 of the first housing 110, while the terminals and other structures of the socket are located inside the bottom housing 200. Therefore, the plug pins need to be able to pass through the protective door 300 so as to electrically connect with the safety socket. The specific implementation to satisfy the above requirements is not limited in this embodiment; for better understanding, a preferred embodiment is provided in this application.

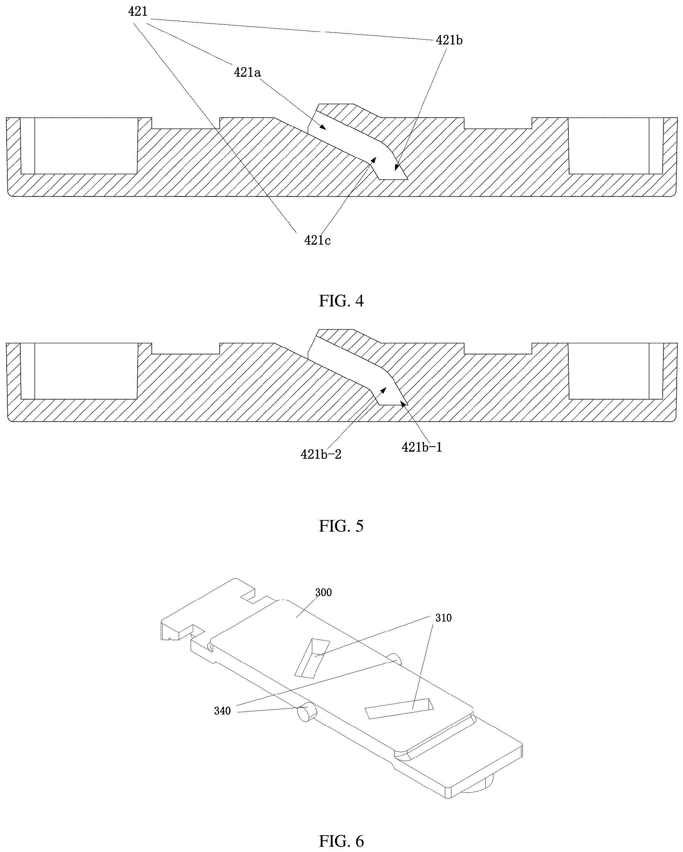

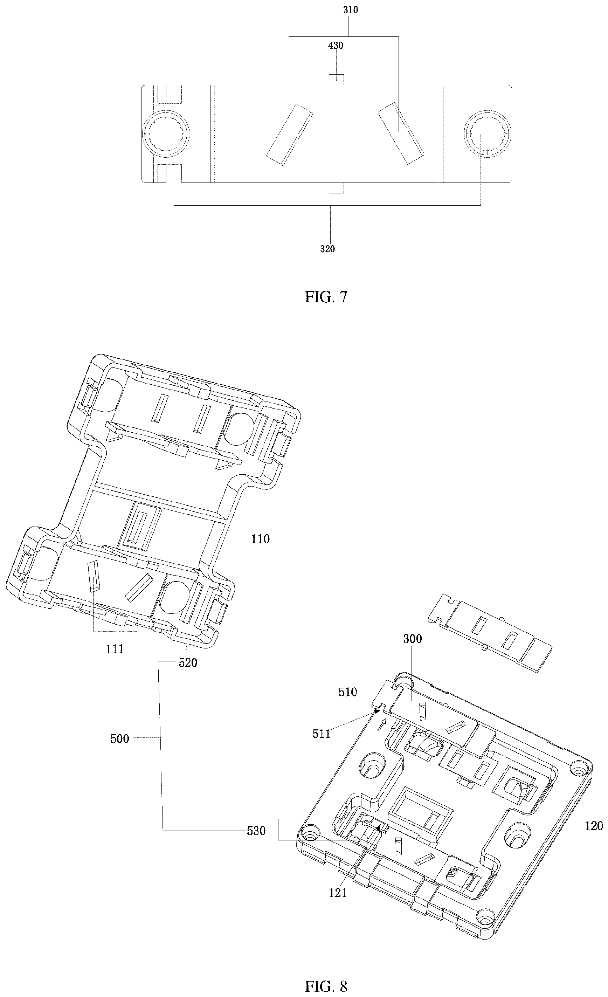

Please refer to FIG. 6 and FIG. 7. The protective door 300 is provided with through holes 310 for the plug pins to pass through. When the plug pins are not inserted into the socket, the through holes 310 are offset from the insertion holes 111, so that the protective door 300 blocks the insertion holes 111.

In this embodiment, the protective door 300 is provided with through holes 310 for the plug pins to pass through, so that the plug pins can be electrically connected with the safety socket. In addition, when the plug pins are not inserted into the socket, the through holes 310 and the insertion holes 111 are offset from each other, thereby achieving the effect that the protective door 300 blocks the insertion holes 111.

It should be further noted that, based on the technical solution in which the driving member 410 of the driving and guiding structure 400 drives the protective door 300 to attach to the first housing 110 as described above, there also exists the technical issue of how the driving member 410 drives the protective door 300 to attach to the first housing 110. To solve the above issue, the following solution is further provided.

Please refer to FIG. 1. The driving member 410 comprises a first magnet 411 disposed on the protective door 300 and a second magnet 412 disposed on the faceplate unit 100. The first magnet 411 and the second magnet 412 are arranged to attract or repel each other, so as to make the protective door 300 attach to the first housing 110.

In this embodiment, the first magnet 411 and the second magnet 412 are arranged on the protective door 300 and the faceplate unit 100, respectively. By utilizing the attraction or repulsion between the first magnet 411 and the second magnet 412, the protective door 300 is made to attach to the first housing 110, thereby achieving the technical effect that the driving member 410 drives the protective door 300 to attach to the first housing 110.

It should be noted that the protective door 300 is attached to the first housing 110 by means of the first magnet 411 and the second magnet 412. To achieve the effect of the protective door 300 attaching to the first housing 110 by utilizing the attraction or repulsion between the first magnet 411 and the second magnet 412, it is necessary to further determine the positions of the first magnet 411 and the second magnet 412. The specific implementation to satisfy the above requirements is not limited in this embodiment; for better understanding, a preferred embodiment is provided in this application.

Optionally, the faceplate unit 100 further comprises a second housing, and the protective door 300 is provided between the first housing 110 and the second housing; the second magnet 412 is disposed on the second housing and repels the first magnet 411; the first magnet 411 is located, in the horizontal direction, between the second magnet 412 and the insertion hole 111.

In this embodiment, the second magnet 412 is disposed on the second housing, and the first magnet 411 is disposed horizontally between the second magnet 412 and the insertion hole 111, so that the protective door 300 can attach to the first housing 110 and block the insertion hole 111 under the repulsive action between the first magnet 411 and the second magnet 412.

It should be further noted that, based on the above technical solution in which the first magnet 411 and the second magnet 412 repel each other, there still exists the technical problem of how to achieve the above requirement by enabling the first magnet 411 and the second magnet 412 to attract each other. To solve the above issue, the following solution is further provided.

Please refer to FIGS. 1-3. The second magnet 412 is disposed on the first housing 110 and attracts the first magnet 411.

In this embodiment, the first magnet 411 is disposed on the protective door 300, the second magnet 412 is disposed on the first housing 110, and the first magnet 411 and the second magnet 412 attract each other, so that the protective door 300 can attach to the first housing 110 and block the insertion hole 111.

It should be noted that, based on the foregoing technical solution in which the first magnet 411 and the second magnet 412 are configured to drive the protective door 300 to attach to the first housing 110, there further exists the technical problem of how to fix the first magnet 411 and the second magnet 412. To solve the above problem, the following solution is further provided.

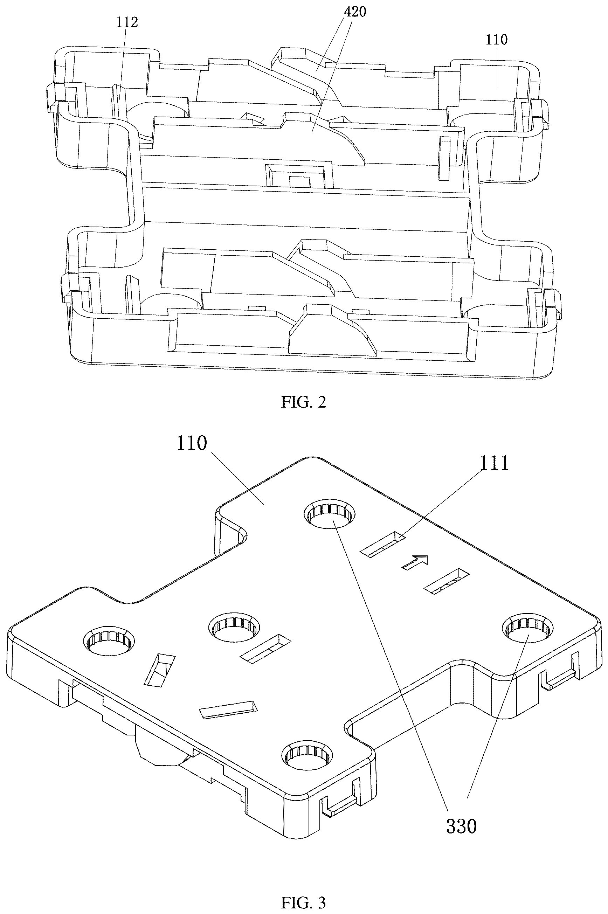

Please refer to FIGS. 2-3 and FIGS. 6-7. The protective door 300 is provided with a first accommodating recess for fixing the first magnet 411; the faceplate unit 100 is provided with a second accommodating recess for fixing the second magnet 412.

In this embodiment, a first accommodating recess for fixing the first magnet 411 is provided on the protective door 300, and a second accommodating recess for fixing the second magnet 412 is provided on the faceplate unit 100, so that the first magnet 411 and the second magnet 412 can be fixed to the protective door 300 and the faceplate unit 100 respectively.

It should be noted that the first magnet 411 is fixed in the first accommodating recess of the protective door 300, and the second magnet 412 is fixed in the second accommodating recess of the faceplate unit 100. Since the attraction or repulsion between the first magnet 411 and the second magnet 412 is not great, the distance between the first magnet 411 fixed in the first accommodating recess and the second magnet 412 fixed in the second accommodating recess needs to be close. The specific implementation to satisfy the above need is not limited in this embodiment; for ease of understanding, a preferred implementation is provided in this application.

Optionally, a thickness of groove bottom of the first accommodating recess is between 0.03 mm and 2 mm.

In this embodiment, the thickness of groove bottom of the first accommodating recess is between 0.03 mm and 2 mm, so that the distance between the first magnet 411 fixed in the first accommodating recess and the second magnet 412 fixed in the second accommodating recess is close, thereby the attraction or repulsion between the first magnet 411 and the second magnet 412 can drive the protective door 300 to attach to the first housing 110 and block the insertion hole 111.

It should be noted that, based on the foregoing technical solution in which the first magnet 411 and the second magnet 412 drive the protective door 300, there further exists the technical problem of how to arrange and drive the protective door 300 by the first magnet 411 and the second magnet 412. To solve the above problem, the following solution is further provided.

Please refer to FIGS. 1-3 and FIGS. 6-7. The protective door 300 is provided with a first magnet recess 320, the first magnet 411 is disposed in the first magnet recess 320; the first housing 110 is provided with a second magnet recess 330, the second magnet 412 is disposed in the second magnet recess 330; the first magnet recess 320 and the second magnet recess 330 are aligned with each other when the protective door 300 blocks the insertion hole 111; the first magnet 411 and the second magnet 412 attract each other.

In this embodiment, by providing a first magnet recess 320 and a second magnet recess 330 on the protective door 300 and the first housing 110 respectively, and disposing the first magnet 411 and the second magnet 412 in the first magnet recess 320 and the second magnet recess 330 respectively, the positions of the first magnet recess 320 and the second magnet recess 330 are determined such that, when the protective door 300 blocks the insertion hole 111, the grooves are aligned with each other. In this way, under the mutual attraction between the first magnet 411 and the second magnet 412, the protective door 300 can be attached to the first housing 110 and block the insertion hole 111.

It should be noted that, based on the foregoing technical solution in which the first magnet 411 and the second magnet 412 drive the protective door 300 by mutual attraction, there further exists the technical problem of how to drive the protective door 300 by mutual repulsion between the first magnet 411 and the second magnet 412. To solve the above problem, the following solution is further provided.

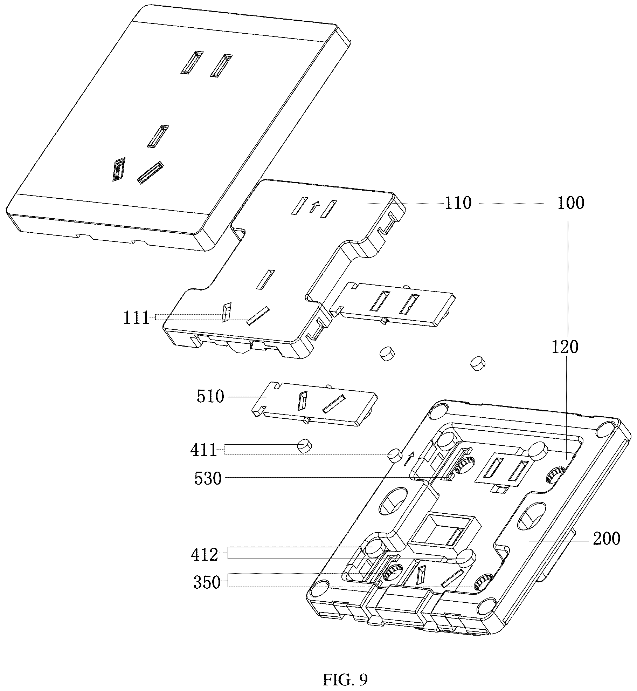

Please refer to FIG. 9. The protective door 300 is provided with a first magnet recess 320, and the first magnet 411 is disposed in the first magnet recess 320. The faceplate unit 100 includes a second housing, and the first housing 110 is arranged above the second housing. The second housing is provided with a third magnet recess 350, and the second magnet 412 is disposed in the third magnet recess 350. When the plug pins are inserted into the socket, the first magnet recess 320 is located between the third magnet recess 350 and the insertion hole 111. The first magnet 411 and the second magnet 412 repel each other.

In this embodiment, by providing a third magnet recess 350 on the second housing, disposing the first magnet 411 and the second magnet 412 in the first magnet recess 320 and the third magnet recess 350 respectively, and determining that when the plug pins are inserted into the socket, the first magnet recess 320 is positioned between the third magnet recess 350 and the insertion hole 111, it is ensured that when the plug pins are withdrawn, the protective door 300 can be reset to the position blocking the insertion hole 111 and attached to the first housing 110 under the repulsive force between the first magnet 411 and the second magnet 412.

It should be noted that the protective door 300 is attached to the first housing 110 and blocks the insertion hole 111 by means of the first magnet 411 fixed in the first magnet recess 320 and the second magnet 412. The first magnet recess 320 can be implemented in various manners. Among the implementations that meet the above requirements, the first magnet 411 fixed in the first magnet recess 320 should be able to stably attach the protective door 300 to the first housing 110 and block the insertion hole 111. The present embodiment does not limit the specific implementations that meet the above requirements. For ease of understanding, a preferred implementation is provided herein.

Please refer to FIG. 7. The first magnet recess 320 is provided at both ends of the protective door 300.

In this embodiment, by arranging the first magnet recesses 320 at both ends of the protective door 300 and disposing the first magnets 411 in the first magnet recesses 320 at both ends, the driving force of the first magnet 411 and the second magnet 412 can act evenly on the protective door 300, so that the protective door 300 can be stably attached to the first housing 110 and block the insertion hole 111.

It should be noted that, based on the technical solution of driving the protective door 300 by means of the first magnet 411 fixed in the first magnet recess 320 and the second magnet 412, there further exists the technical issue of how to install the second magnet 412. To address this issue, the following solution is further provided.

Optionally, the protective door 300 is provided with a first magnet recess 320, and the first magnet 411 is disposed in the first magnet recess 320. The first magnet recess 320 is arranged at one end of the protective door 300. The first housing 110 is provided with a magnet mounting protrusion, and the second magnet 412 is mounted on the magnet mounting protrusion, which is located adjacent to the first magnet recess 320.

In this embodiment, the magnet mounting protrusion is located near the first magnet recess 320, and the second magnet 412 is mounted on the magnet mounting protrusion, so that the driving force of the first magnet 411 and the second magnet 412 can act on the protective door 300. For example, the first magnet 411 and the second magnet 412 attract each other, so that when the plug pins are withdrawn, the protective door 300 can be reset to the position blocking the insertion hole 111.

It should be noted that, besides the solution of using a magnet as the driving member 410, the driving member 410 can also be implemented in various other manners. The present embodiment does not limit the specific implementations that meet the above requirements. For ease of understanding, a preferred implementation is provided herein.

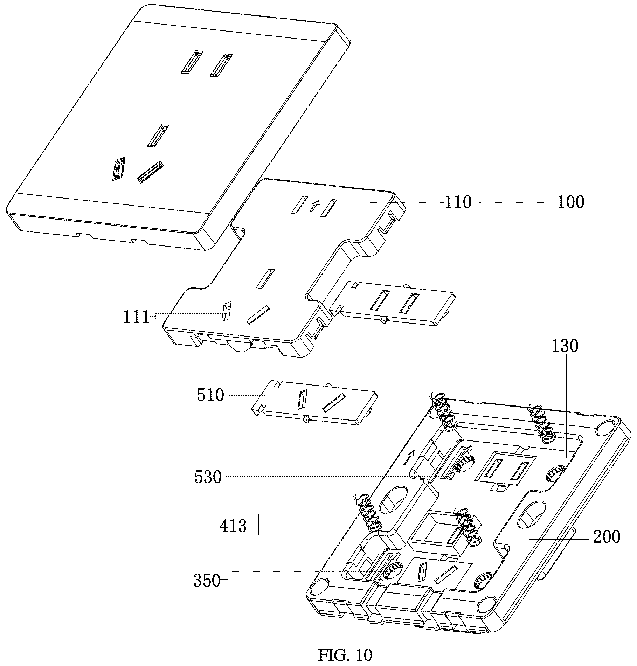

Please refer to FIG. 10. The driving member 410 is a spring 413, which has a first spring end and a second spring end that are opposite to each other. The first spring end is disposed on the protective door 300. The spring 413 is used to elastically pull or press the protective door 300, so that the protective door 300 is attached to the first housing 110.

In this embodiment, the driving member 410 is configured as a spring 413, with one end disposed on the protective door 300, so that the spring 413 can elastically pull or press the protective door 300, thereby causing the protective door 300 to attach to the first housing 110 and block the insertion hole 111.

It should be noted that the first end of the spring 413 is arranged on the protective door 300 to elastically press or pull the protective door 300. Since the function of the spring 413 requires both ends to be fixed to components, it is necessary to determine which component the other end of the spring 413 is fixed to. The present embodiment does not limit the specific implementation that meets the above requirements; for ease of understanding, a preferred implementation is provided in this application.

Optionally, the second end of the spring is fixed to the first housing 110, and the spring 413 pulls the protective door 300, so that the protective door 300 is attached to the first housing 110.

In this embodiment, the second end of the spring 413 is fixed to the first housing 110, so that the function of the spring 413 can be realized. Additionally, by pulling the protective door 300 with the spring 413, the protective door 300 can be attached to the first housing 110 and block the insertion hole 111.

It should be noted that, based on the above technical solution of pulling the protective door 300 with the spring 413, there is further a technical issue regarding how to elastically press the protective door 300 with the spring 413. To address this issue, the following solution is further provided.

Please refer to FIG. 10. The faceplate unit 100 includes a third housing 130, with the first housing 110 disposed above the third housing 130. The second end of the spring is fixed to the third housing 130, and the spring 413 elastically presses the protective door 300, so that the protective door 300 is attached to the first housing 110.

In this embodiment, by fixing the second end of the spring to the third housing 130 located below the first housing 110, the spring 413 can elastically press the protective door 300 against the first housing 110, thereby causing the protective door 300 to attach to the first housing 110 and block the insertion hole 111.

It should be noted that when the driving member 410 is a spring 413, it can elastically tension or pull the protective door 300, so that the protective door 300 is attached to the first housing 110 and blocks the insertion hole 111. When the spring 413 causes the protective door 300 to attach to the first housing 110, the protective door 300 must be able to stably attach to the first housing 110. The present embodiment does not limit the specific implementations that satisfy the above requirements; for ease of understanding, a preferred implementation is provided herein.

Optionally, a plurality of springs 413 are provided, arranged at both ends of the protective door 300.

In this embodiment, a plurality of springs 413 are disposed at both ends of the protective door 300, so that the protective door 300 can stably attach to the first housing 110 and effectively block the insertion hole 111.

It should be noted that, based on the above technical solution of using spring 413 to drive the protective door 300 back to its original position, there is further a technical issue regarding how to install the spring 413. To address this issue, the following solution is further provided.

Optionally, the protective door 300 has opposite first and second end portions. The first end of the spring is provided at the first end portion of the protective door; the first housing 110 is provided with a spring mounting protrusion, and the second end of the spring is mounted on the spring mounting protrusion, which is adjacent to the first end portion of the protective door.

In this embodiment, by providing a spring mounting protrusion on the first housing 110, which is adjacent to the first end portion of the protective door, and arranging the first and second spring ends respectively on the protective door 300 and the spring mounting protrusion, the spring 413 can elastically press or pull the protective door 300, so that the protective door 300 is attached to the first housing 110 and blocks the insertion hole 111.

It should be noted that, based on the above technical solution of attaching the protective door 300 to the first housing 110 and blocking the insertion hole 111, there is further a technical issue regarding how the protective door 300 blocks the insertion hole 111. To address this issue, the following solution is further provided.

Optionally, a blocking protrusion 340 is provided on the upper surface of the protective door 300, and the blocking protrusion 340 is used to block the insertion hole 111.

In this embodiment, by providing the blocking protrusion 340 on the upper surface of the protective door 300, the protective door 300 can block the insertion hole 111 via the blocking protrusion 340 when it is attached to the first housing 110.

It should be noted that, based on the above technical solution of attaching the protective door 300 to the first housing 110 and blocking the insertion hole 111, there is further a technical issue regarding how to prevent the protective door 300 from moving too far during movement, which would prevent it from returning to its original position. To address this issue, the following solution is further provided.

Please refer to FIG. 2. The first housing 110 is provided with limiting protrusions 112, which are arranged at both ends of the protective door 300.

In this embodiment, a limiting protrusion 112 is provided on the first housing 110, so that when the protective door 300 moves to a large extent, it will abut against the limiting protrusion 112 to restrict the movement of the protective door 300, thereby preventing the problem of the protective door 300 failing to reset due to excessive movement.

It should be noted that, based on the above technical solution in which the protective door 300 resets to block the insertion hole 111 when the plug pins are withdrawn and moves away when the plug pins are inserted to enable electrical connection between the plug pins and the socket, there is further a technical issue regarding in which direction the protective door 300 moves. To address this issue, the following solution is further provided.

Please refer to FIG. 2 and FIG. 4- FIG. 5. The guiding portion 420 is provided with a guiding slot 421, and the protective door 300 is provided with a guiding protrusion 430 that matches the guiding slot 421. The guiding protrusion 430 is embedded in the guiding slot 421. The guiding slot 421 and the guiding protrusion 430 are configured such that, when the protective door 300 moves, the protective door 300 moves in the direction in which the insertion hole 111 and the through hole 310 are aligned or misaligned.

In this embodiment, the guiding protrusion 430 is provided on the protective door 300, and the guiding slot 421 is provided on the guiding portion 420. By embedding the guiding protrusion 430 into the guiding slot 421, the protective door 300, under the guiding action of the guiding protrusion 430 and the guiding slot 421, moves in the direction in which the insertion hole 111 and the through hole 310 are aligned or misaligned.

It should be noted that the protective door 300 is guided by the guiding slot 421 and the guiding protrusion 430, so as to move in the direction in which the insertion hole 111 and the through hole 310 are misaligned or aligned, and the guiding function is only activated when all the plug pins are fully inserted, so as to prevent the guiding function from being activated when only a single sharp object or a single metal pin is inserted, which would otherwise allow the protective door 300 to move in the direction in which the insertion hole 111 and the through hole 310 are misaligned or aligned. The specific implementation to meet the above needs is not limited in this embodiment. For ease of understanding, a preferred implementation is provided in this application.

Please refer to Figure 6. The guiding protrusion 430 is located in the middle of both sides of the protective door 300, so that when a single plug pin is inserted into the insertion hole 111, the protective door 300 swings.

In this embodiment, by providing the guiding protrusion 430 in the middle of both sides of the protective door 300, when a single plug pin, single sharp object, or single metal pin is inserted into the insertion hole 111, the protective door 300 swings but does not move in the direction in which the insertion hole 111 and the through hole 310 are aligned or misaligned, so that a single plug pin, single sharp object, or single metal pin cannot be electrically connected to the socket.

It should be noted that, based on the aforementioned technical solution in which the guiding slot 421 and the guiding protrusion 430 guide the protective door 300 to move in the direction of alignment or misalignment of the insertion hole 111 and the through hole 310, there still exists the technical problem of how the guiding slot 421 and the guiding protrusion 430 guide the protective door 300 to move in the direction of alignment or misalignment of the insertion hole 111 and the through hole 310. To solve the above problem, the following solution is further provided.

Please refer to Figures 2 and 4-5. The guiding slot 421 includes a transverse slot 421a and a sinking slot 421b. The sinking slot 421b has an opposing first sinking slot end 421b-1 and second sinking slot end 421b-2. The first sinking slot end 421b-1 is close to the first housing 110, and the second sinking slot end 421b-2 extends away from the first housing 110. The second sinking slot end 421b-2 is connected to the transverse slot 421a.

In this embodiment, by means of the guiding protrusion 430 and the transverse slot 421a of the guiding slot 421, the protective door 300 is guided to move in a direction that enables the insertion hole 111 and the through hole 310 to be aligned or misaligned. In addition, the sinking slot 421b, which is connected to the transverse slot 421a, allows the protective door 300 to be close to the first housing 110, so that it can be attached to the first housing 110 and block the insertion hole 111.

It should be noted that the transverse slot 421a and the sinking slot 421b of the guiding slot 421 not only allow the protective door 300 to move in the direction of alignment or misalignment of the insertion hole 111 and the through hole 310, but also allow the protective door 300 to be attached to the first housing 110 and block the insertion hole 111. When the plug pins are not fully inserted into the insertion hole 111, the protective door 300 needs to be attached to the first housing 110, rather than moving in the direction of alignment of the insertion hole 111 and the through hole 310. The specific implementation to meet the above needs is not limited in this embodiment. For ease of understanding, a preferred implementation is provided in this application.

Please refer to Figures 2 and 4-5. The sinking slot 421b and the transverse slot 421a are formed as straight slots. The angle between the direction in which the plug pin is inserted into the insertion hole 111 and the sinking slot 421b is smaller than the angle between the direction in which the plug pin is inserted into the insertion hole 111 and the transverse slot 421a.

In this embodiment, the sinking slot 421b and the transverse slot 421a extend in a straight line. The angle between the direction in which the plug pin is inserted into the insertion hole 111 and the sinking slot 421b is smaller than the angle between the direction in which the plug pin is inserted into the insertion hole 111 and the transverse slot 421a, so that when the plug pins are not fully inserted into the insertion hole 111, the protective door 300 is attached to the first housing 110, rather than moving in the direction in which the insertion hole 111 and the through hole 310 are aligned.

It should be noted that, based on the technical solution in which the guiding slot 421 includes the transverse slot 421a and the sinking slot 421b, there still exists the technical problem of how to enable the guiding protrusion 430 to move smoothly from the sinking slot 421b to the transverse slot 421a. To solve the above problem, the following solution is further provided.

Please refer to FIG. 2 and 4-5. The guiding slot 421 further includes an arc-shaped slot 421c, which is provided at the connecting area between the second sinking slot end 421b-2 of the second sinking slot and the transverse slot 421a.

In this embodiment, by providing the arc-shaped slot 421c at the connecting area between the end portion 421b-2 of the second sinking slot and the transverse slot 421a, the guiding protrusion 430 can smoothly move from the sinking slot 421b to the transverse slot 421a.

It should be noted that when a single pin is inserted into the socket, it is easy to cause a safety accident, so it is necessary for the safety socket to prevent insertion of a single pin. The specific implementation to satisfy the above need is not limited in this embodiment; for ease of understanding, a preferred implementation is provided herein.

Please refer to FIG. 8. The safety socket is provided with a stop structure 500. The stop structure 500 includes a first stop portion 510 and a second stop portion 520. The protective door 300 has a first end portion, the first stop portion 510 is provided at the first end portion of the protective door, and the second stop portion 520 is provided on the first housing 110. The first stop portion 510 and the second stop portion 520 are configured such that when a single pin is inserted into the insertion hole 111 away from the first end portion of the protective door, the first stop portion 510 abuts against the second stop portion 520 to limit the movement of the protective door 300 and prevent the single pin from electrically connecting with the safety socket.

In this embodiment, by providing the first stop portion 510 and the second stop portion 520 on the protective door and the first housing 110, when a single pin is inserted into the insertion hole 111 away from the first end portion of the protective door, the first stop portion 510 abuts against the second stop portion 520, thereby achieving the effect of restricting the movement of the protective door 300, so that the plug pin cannot pass through the protective door 300 to make an electrical connection with the socket.

It should be noted that, based on the above technical solution for preventing a single pin from being inserted into the insertion hole 111 away from the first end portion of the protective door, there further exists the technical problem of preventing a single pin from being inserted into the insertion hole 111 near the first end portion of the protective door. To solve the above problem, the following solution is further provided.

Please refer to FIG. 8. The faceplate unit 100 includes a second housing 120; the first housing 110 is provided above the second housing 120; the stop structure 500 includes a third stop portion 530; the third stop portion 530 is provided on the second housing 120; the first stop portion 510 and the third stop portion 530 are configured such that when a single pin is inserted into the insertion hole 111 near the first end portion of the protective door, the first stop portion 510 abuts against the third stop portion 530 to limit the movement of the protective door 300 and prevent the single pin from electrically connecting with the safety socket.

In this embodiment, by providing the first stop portion 510 and the third stop portion 530 on the protective door 300 and the second housing 120, when a single pin is inserted into the insertion hole 111 near the first end portion of the protective door, the first stop portion 510 abuts against the third stop portion 530, thereby achieving the effect of restricting the movement of the protective door 300, so that the plug pin cannot pass through the protective door 300 to make an electrical connection with the socket.

It should be noted that, based on the above technical solution using the stop structure 500 to prevent a single pin from being inserted into the protective door, there further exists the technical problem of how to allow the plug pins inserted into the insertion hole 111 to extend to a deeper position to pass through the second housing 120 and electrically connect with the components below the second housing 120. To solve the above problem, the following solution is further provided.

Please refer to FIG. 8. The first stop portion 510 is provided with an avoidance recess 511, the second housing 120 is provided with a protective door sinking slot 121, and the third stop portion 530 is provided in the protective door sinking slot 121. The avoidance recess 511 is configured such that, when the plug pin is inserted into the insertion hole 111, the protective door 300 bypasses the third stop portion 530 via the avoidance recess 511. The protective door sinking slot 121 is configured to receive the protective door 300 when the plug pin is inserted into the insertion hole 111.

In this embodiment, by providing the protective door sinking slot 121 in the second housing 120, when the entire plug pin is inserted into the insertion hole 111, the protective door 300 can be embedded in the protective door sinking slot 121 of the second housing 120. In this way, there is no need for a large space between the first housing 110 and the second housing 120 for the protective door to use, so the depth between the first housing 110 and the second housing 120 is reduced, achieving the effect that the plug pins can extend to a deeper position when inserted into the insertion hole 111, so as to pass through the second housing 120 and electrically connect with the components below the second housing 120.

At the same time, since the first stop portion 510 is provided with the avoidance recess 511, when the protective door 300 is embedded into the protective door sinking slot 121, it can avoid the third stop portion 530.

It should be noted that the third stop portion 530 itself also has the function of the above-mentioned limiting protrusion 112, which can prevent the protective door 300 from moving excessively and thereby prevent the situation where the protective door 300 cannot return to its original position.

In summary, the safety socket provided by the embodiments of this application includes a faceplate unit 100. The faceplate unit 100 includes a first housing 110, and the first housing 110 is provided with insertion holes 111; the insertion holes 111 are configured for the insertion of plug pins. The safety socket includes a base housing 200, which is arranged below the first housing 110. The safety socket includes a protective door 300, which is arranged between the first housing 110 and the base housing 200. When plug pins are not inserted into the socket, the protective door 300 abuts against the inner surface of the first housing 110 and blocks the insertion holes 111. The safety socket includes a driving and guiding structure 400, which includes a driving member 410 and a guiding portion 420. The driving member 410 is disposed on the protective door 300 and/or the first housing 110 and is configured to drive the protective door 300 to attach to the first housing 110. The guiding portion 420 is provided on the faceplate unit 100 and is configured to guide the movement direction of the protective door 300 when the plug pins are inserted into or withdrawn from the insertion holes 111. In this way, the problem of water entering the insertion holes 111 when the socket is not in use is solved.

The above description is only a preferred embodiment of the present disclosure and does not limit the scope of the present disclosure. Any equivalent structural changes made under the inventive concept of the present disclosure, or directly/indirectly applied to other related technical fields, are all included within the scope of patent protection of the present disclosure.

## Claims

1. A safety socket, **characterized by** comprising:
a faceplate unit, the faceplate unit comprising a first housing, the first housing being provided with an insertion hole; the insertion hole is configured for insertion of plug pins;
a base housing, the base housing being arranged below the first housing;
a protective door, the protective door being arranged between the first housing and the base housing; when the plug pins are not inserted into the socket, the protective door abuts against the inner surface of the first housing and blocks the insertion hole;
a driving and guiding structure, the driving and guiding structure comprising a driving member and a guiding portion, the driving member being disposed on the protective door and/or the first housing, the driving member being configured to drive the protective door to attach to the first housing; the guiding portion is disposed on the faceplate unit and is configured to guide the moving direction of the protective door when the plug pins are inserted into or withdrawn from the insertion hole.

2. The safety socket according to claim 1, **characterized in that** the protective door is provided with a through hole for the plug pins to pass through; the through hole is offset from the insertion hole when the plug pins are not inserted into the socket, so that the protective door blocks the insertion hole.

3. The safety socket according to claim 1, **characterized in that** the driving member comprises a first magnet disposed on the protective door and a second magnet disposed on the faceplate unit; the first magnet and the second magnet attract or repel each other, so that the protective door attaches to the first housing.

4. The safety socket according to claim 3, **characterized in that** the faceplate unit further comprises a second housing, the protective door is disposed between the first housing and the second housing; the second magnet is disposed in the second housing and repels the first magnet; the first magnet is located, in the horizontal direction, between the second magnet and the insertion hole.

5. The safety socket according to claim 3, **characterized in that** the second magnet is disposed in the first housing and is attracted by the first magnet.

6. The safety socket according to claim 3, **characterized in that** the protective door is provided with a first accommodating recess for fixing the first magnet; the faceplate unit is provided with a second accommodating recess for fixing the second magnet.

7. The safety socket according to claim 6, **characterized in that** a thickness of groove bottom of the first accommodating recess is between 0.03 mm and 2 mm.

8. The safety socket according to claim 3, **characterized in that** the protective door is provided with a first magnet recess, the first magnet being disposed in the first magnet recess; the first housing is provided with a second magnet recess, the second magnet being disposed in the second magnet recess;
the first magnet recess and the second magnet recess are aligned with each other when the protective door blocks the insertion hole; the first magnet and the second magnet attract each other.

9. The safety socket according to claim 3, **characterized in that** the protective door is provided with a first magnet recess, the first magnet being disposed in the first magnet recess; the faceplate unit comprises a second housing, the first housing being disposed above the second housing;
the second housing is provided with a third magnet recess, the second magnet being disposed in the third magnet recess;
when the plug pins are inserted into the socket, the first magnet recess is located between the third magnet recess and the insertion hole; the first magnet and the second magnet repel each other.

10. The safety socket according to claim 8 or 9, **characterized in that** the first magnet recess is disposed at both ends of the protective door.

11. The safety socket according to claim 3, **characterized in that** the protective door is provided with a first magnet recess, the first magnet being disposed in the first magnet recess; the first magnet recess is disposed at one end of the protective door;
the first housing is provided with a magnet mounting protrusion, the second magnet being mounted on the magnet mounting protrusion, and the magnet mounting protrusion being close to the first magnet recess.

12. The safety socket according to claim 1, **characterized in that** the driving member is a spring, the spring having a first spring end and a second spring end that are opposite to each other;
the first spring end is provided on the protective door, the spring is configured to elastically tension or elastically press the protective door, so that the protective door attaches to the first housing.

13. The safety socket according to claim 12, **characterized in that** the second spring end is provided on the first housing, and the spring tensions the protective door so that the protective door attaches to the first housing.

14. The safety socket according to claim 12, **characterized in that** the faceplate unit comprises a third housing, the first housing being disposed above the third housing;
the second spring end is provided on the third housing, the spring elastically presses the protective door so that the protective door attaches to the first housing.

15. The safety socket according to any one of claims 13-14, **characterized in that** a plurality of the springs is provided, and the springs are arranged at both ends of the protective door.

16. The safety socket according to claim 12, **characterized in that** the protective door is provided with a first protective door end and a second protective door end that are opposite to each other, the first spring end being provided on the first protective door end;
the first housing is provided with a spring mounting protrusion, the second spring end is mounted on the spring mounting protrusion, and the spring mounting protrusion is close to the first protective door end.

17. The safety socket according to claim 1, **characterized in that** the upper surface of the protective door is provided with a blocking protrusion, and the blocking protrusion is configured to block the insertion hole.

18. The safety socket according to claim 1, **characterized in that** the first housing is provided with a limiting protrusion, and the limiting protrusion is provided at both ends of the protective door.

19. The safety socket according to claim 1, **characterized in that** the guiding portion is provided with a guiding slot, the protective door is provided with a guiding protrusion adapted to the guiding slot, and the guiding protrusion is embedded in the guiding slot;
the guiding slot and the guiding protrusion are configured such that, when the protective door moves, the protective door moves in the direction in which the insertion hole and the through hole are aligned or misaligned.

20. The safety socket according to claim 19, **characterized in that** the guiding protrusion is located at the middle of both sides of the protective door, so that when a single plug pin is inserted into the insertion hole, the protective door swings.

21. The safety socket according to claim 19, **characterized in that** the guiding slot comprises a transverse slot and a sinking slot;
the sinking slot has a first sinking slot end and a second sinking slot end that are opposite to each other; the first sinking slot end is close to the first housing; the second sinking slot end extends away from the first housing; the second sinking slot end communicates with the transverse slot.

22. The safety socket according to claim 21, **characterized in that** the sinking slot and the transverse slot are formed as straight slots, and the angle between the direction in which the pin is inserted into the insertion hole and the sinking slot is less than the angle between the direction in which the pin is inserted into the insertion hole and the transverse slot.

23. The safety socket according to claim 21, **characterized in that** the guiding slot further comprises an arc-shaped slot, the arc-shaped slot being arranged at connecting area of the second sinking slot end and the transverse slot.

24. The safety socket according to claim 1, **characterized in that** the safety socket is provided with a stop structure, the stop structure comprising a first stop portion and a second stop portion;
the protective door has a first protective door end, the first stop portion is provided at the first protective door end, and the second stop portion is provided on the first housing;
the first stop portion and the second stop portion are configured such that, when a single pin is inserted into the insertion hole remote from the first protective door end, the first stop portion abuts against the second stop portion, thereby restricting movement of the protective door and blocking the single pin from electrically connecting to the safety socket.

25. The safety socket according to claim 24, **characterized in that** the faceplate unit comprises a second housing, the first housing being disposed above the second housing, and the stop structure comprises a third stop portion;
the third stop portion is provided on the second housing;
the first stop portion and the third stop portion are configured such that, when a single pin is inserted into the insertion hole close to the first protective door end, the first stop portion abuts against the third stop portion, thereby restricting movement of the protective door and preventing a single pin from being electrically connected to the safety socket.

26. The safety socket according to claim 25, **characterized in that** the first stop portion is provided with an avoidance recess, the second housing is provided with a protective door sinking slot, and the third stop portion is provided on the protective door sinking slot;
the avoidance recess is configured such that, when the plug pin is inserted into the insertion hole, the protective door bypasses the third stop portion via the avoidance recess;
the protective door sinking slot is configured such that, when the plug pin is inserted into the insertion hole, the protective door is embedded into the protective door sinking slot.
